# EUROPEAN PATENT APPLICATION

(11) **EP 2 219 148 A1**
(43) Date of publication of application: **18.08.2010**
(21) Application number: 10250246.5
(22) Date of filing: 12.02.2010
(51) Int. Cl.: G06Q 20/00, G06Q 40/00

(54) **Systems, methods and computer program products for optimizing routing of financial payments**

(30) Priority: 13.02.2009 US 370943
(71) Applicant: BANK OF AMERICA CORPORATION, Charlotte, NC 28255 (US)
(72) Inventor: Zanzot, Mark D., Charlotte North Carolina 28255 (US); Briggs, Garrett C, Charlotte North Carolina 28255 (US); Dryer, Eric, Charlotte North Carolina 28255 (US); Calderone, Anthony B., Charlotte North Carolina 28255 (US); Thomas, William, Earl II, Charlotte North Carolina 28255 (US); Frew, David, Todd, Charlotte North Carolina 28255 (US); Cantley, Kerry, Charlotte North Carolina 28255 (US); Tobin, Philip, Charlotte North Carolina 28255 (US)
(74) Representative: Kinsler, Maureen Catherine

(57) **Abstract**

Systems, methods, and computer program products are provided for optimizing routing of financial payments by determining routing on a per-payment transaction basis based on one or more routing rules. The routing rules take into account payment factors such as, but not limited to, cost of payment processing, time for payment processing, risk/quality of payment processing, remittance requirements and/or the destination of the payment. From the payor or payee perspective, payor-drfined or payee-defined payment attributes associated with these or other payment factors can be predefined in a payor/payee profile or dynamically defined proximate to the time at which the payment request is initiated. In this regard, present embodiments serve to create a payment process that is beneficial, in terms of cost, timeliness, quality and the like, to both the payor, the payee and financial institution handling payment processing.

## Description

### FIELD

In general, embodiments herein disclosed relate to systems, methods, and computer program products for processing financial payments and, more specifically, optimizing routing of financial payments by determining payment charmels on a per-payment basis.

### BACKGROUND

Currently, in the United States market, Financial payment processing follows traditional product based routing. This means that payment is destined for a specific product silo prior to being received by a financial institution. Silo payment processing occurs prior to image capture and involves a series of linearly processed steps, in which the form of the received payment input is, in many instances, the same as the payment, remittance/settlement. For example, if the payment is inputted electronically, the product silo outputs payment, in many instances, electronically. Thus, each payment type, such as paper, image, electronic, wire, Automated Clearing House (ACH) and the like, has its own product silo and the channel, and thus silo, is chosen prior to transaction submission. These individual product silos are not fully integrated and as such, operate autonomously as separate systems. In this regard, specific product silos require specific logic processing and processing hardware based on which payment type/product the silo is set-up to accommodate.

International payment systems differ somewhat in that the payments are destined for low value channels or high value channels but, similar to Unites States payment processing, payments are pre-dispositioned prior to transmission.

Neither domestic nor international payment systems account for the custornet/payor and, in some instances, the payment-processing financial institution, in terms of cost efficiency, timeliness of payment or other payment factors. For example, while a customer may be unconcerned with bow a payment is routed, they are typically concerned with the speed of which the payment is received by the payee. In most instances, the customer/payor will desire payment to be received by the payee as soon as possible, however, in some instances the payor may desire a lag-time in payment receipt by the payor to insure that sufficient funds exist in the designated payment account. In addition to timeliness, the customer/payor may be concerned with the quality or risk of the payment transaction, *i.e.*, insuring that the payment is made at the designated time and destination and/or the costs incurred by the customer/payor in making the payment. From the financial institution standpoint, the financial institution is concerned with making the payment in the most cost-efficient manner, so to maximize their profitability, while taking into account the customer's needs in terms of timeliness and payment risk.

Therefore, a need exists to develop systems, method, computer program products and the like for processing financial payments more effectively and cost efficiently. The desired systems, methods, computer program products and the like should allow for customers/payors to either predefine payment configuration or dynamically define payment configuration on a per-payment or per-payment file basis, so as to address the needs of the customer/payor in terms of payment timeliness, payment cost, payment quality and the like. In addition, desired systems, methods, computer program products and the like should allow for financial institution to make payment routing decisions that not only take into account the customer's/payor's needs and concerns, but also take into account the financial institutions concern of minimizing the costs related to each transaction. Additionally, by providing for methods, computer program products and the like that allow the customer/payor greater options in predetermined payment configuration and/or dynamically configuring payment on a per-payment basis, the financial institution can implement different price points in the payment process.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

Methods, devices, systems and computer program products are described herein that provide for optimizing routing of financial payment transactions. Optimization of payment routing is realized by determining payment channels on a per-payment or per group of payments (referred to herein as a payment file) basis. In accordance with present embodiments a payment route or payment type is determined from amongst more than one alternative payment type based on one or more routing rules. The routing rules are associated with payment attributes, such as, but not limited to, payment time requirements, payment cost, payment risk/payment quality, payment destination and any other custormer/payor/payee needs or requirements. The payment attributes may be payor-defined attributes or payee-defined attributes that are predetermined and stored in a payor/payee profile or the payor-defined or payee-defined attributes may be dynamically defined at the inception of the payment transaction. In other embodiments the payment attributes may be financial institution-defined payment attributes or payment product-defined payment attributes.

As such, according to presently described embodiment, each payment that is processed may be routed independent of the routing of other payment transactions based on which routing rules ere applied to the transaction and/or which payment attributes are applied to a muting rule. In this regard, the overall payment transaction process is optimized in terms of customer and financial institution efficiency, in that, payment time, payment cost/price and payment risk/quality can be adequately optimized.

According to one specific embodiment of the invention, a method for processing financial payments is defined. The method includes receiving a financial payment transaction from a payor, determining payment routing for the transaction from amongst more than one alternative payment type based on one or more routing rules and providing for financial payment to a payee via the determined payment type.

The alternative payment type may further be defined as any two of the group known or future known payment products, such as, but not limited to, check payment, electronic/Automated Clearing House (ACH) payment, wire payment, card payment, merchant payment, account transfer payment. Society for Worldwide International Financial Telecommunication (SWIFT) payment or the like.

According to optional embodiments of the method determining the payment type may further include determining the payment routing based on one or more routing rules, wherein at least one of the routing rules is associated with payment processing time, payment processing cost/price, payment processing risk/quality, payment remittance requirements or payment destination. In one specific optional embodiment the one or more routing rules arc operable to determine a lowest cost payment type that meets all defined time requirements and/or risk/quslity requirements.

In additional optional embodiments, the method may include receiving one or more payor-defined or payee-defined payment attributes. In such embodiments of the method, determining the payment routing may further include applying the payor-efined and/or payee-defined payment attributes to the one or more routing rules to determine the payment routing. The payor-defined payment attributes or payee-defined payment attributes may be related to at least one of time of payment, cost of payment, payment risk, destination of payment or other payment criteria, such as remittance requirements. In one such optional embodiment of the method, receiving the one or more payor-defined payment attributes or payee-defined attributes may include accessing a payor and/or payee profile database to retrieve the one or more predefined payor-defined payment attributes and/or one or more payee-defined payment attributes from a payor/payee profile associated with the payor/payee. In other optional embodiments the payor-defined payment attributes and/or payee-defined payment attributes may be dynamically defined by the payor and/or payee proximate the point in time of when the financial payment request is made.

In other optional embodiments, the method may include receiving one or more transaction-processing financial institution-defined payment attributes or payment product attributes. In such embodiments, determining the payment routing may further include applying the financial institution-defined payment attributes or payment product attributes to the one or more routing rules to determine the payment routing.

In still further optional embodiments, the method may include receiving one or more transaction-processing financial institution-defined payment attributes and at least one of one or more payor-defined payment attributes or one or more payee-defined payment attributes. In such embodiments, determining the payment routing may further include applying the financial institution-defined payment attributes and the payor-defined payment attributes and/or payee-dofined payment attributes to the one or more routing rules to determine the payment routing.

In yet another optional embodiment the method may include transforming the financial payment transaction to a normalized format prior to determining the payment routing and subsequently transforming the financial payment transaction to a format associated with the determined payment routing prior to providing the financial payment to the payee via the determined payment type.

Yet another embodiment of the invention is defined by an apparatus for processing financial payments. The apparatus includes a computer platform including at least one processor and a memory. The apparatus additionally includes a routing rules database stored in the memory and operable to store one or more muting rules. The apparatus also includes payment routing determination logic executable by the processor and operable to determine payment routing for a payment transaction from amongst more than one alternative payment types based on application of one or more of the routing rules.

In optional embodiments of the apparatus, at least one of the routing may be associated with payment processing time requirements/limitations, payment processing cost requirements/limitations, payment processing risk/quality requirements/limitations and/or payment destination. In one specific embodiment of the apparatus, one er marc of the routing roles may be operable to determine a least-cost payment type that meets time requirements and risk requirements.

In other optional embodiment of the apparatus, the payment routing determination logic is further operable to apply one or more payor-defined payment attributes and/or one or more payee-defined payment attributes to the one or more routing rules to determine the payment routing. The payor-defined payment or payee-defined payment attributes may be related to at least one of time of payment, cost of payment, payment risk or destination of payment. According to one embodiment, the payment routing determination logic may be further operable to access a payor profile database and/or payee profile database to retrieve the one or more payor-defined payment attributes and/or payee-defined payment attributes from a payor/payee profile associated with the payor or payee. While in other optional embodiments, the one or more payor-defined payment attributes or the one or more payee-defined payment attributes may be defined by the payor or the payee proximate a same point in time of the financial payment request. In this regard, the payor-defined attributes or the payee-defined payment attributes may be predefined attributes or dynamic attributes defined at the point of the payment request.

In still further optional embodiments of the apparatus, the payment routing determination logic may be further operable to apply one or more financial institution-defined payment attributes or payment product attributes to the one or more routing rules to determine the payment routing. While in still further optional embodiment of the apparatus, the payment routing determination logic may be further operable to apply one or more financial institution-defined payment attributes and at least one of one or more payor-defined payment attributes or one or more payee-defined payment attributes to the one or more routing rules to determine the payment muting.

Yet another optional embodiment of the apparatus includes payment transaction transformation logic executable by the processor and operable to transform the financial payment transaction to a normalized format prior to determining the payment muting. The payment transaction transformation logic may be further operable to transform the financial payment transaction to a format associated with the determined payment routing prior to providing payment to the payee via the determined payment type.

A computer program product including a compnter-readable medium provides for another alternate embodiment of the present invention. The medium includes a first set of codes for causing a computer to receive a financial payment transaction from a payor. The medium also includes a second set of codes for causing the computer to determine payment routing for the transaction from amongst more than one alternative payment type based on one or more routing rules. Additionally, the medium includes a third set of codes for causing the computer to provide for financial payment to a payee via the determined payment type.

In optional embodiments of the computer program product, the second set of codes may further cause causing the computer to determine the payment routing based on one or more routing rules, wherein at least one of the routing rules is associated with payment processing time limitations/requirements, payment processing cost limitations/requirements, payment processing risk/quality requirements/limitations and/or payment destination. In other optional embodiments of the computer program product, the second set of codes may further cause the computer to determine the payment routing based on one or more routing rules, wherein the one or more routing rules are operable to determine a least-cost payment type that meets time requirements and risk requirements.

According to other optional embodiments the computer program product may include a fourth set of codes for causing the computer to receive one or more payor-defined payment attributes and/or one or more payee-defined payment attributes. In such embodiments, the second set of codes may further cause the computer to apply the payor-defined payment attributes and/or the payee-defined payment attributes to the one or more routing rules to determine the payment routing. In further related embodiments, the fourth set of codes may cause the computer to receive the one or more payor-defiaed payment attributes or payee-defined payment attributes, wherein each attribute is further defined as being related to at least one of time of payment cost of payment, payment risk or destination of payment. In other related embodiments, the fourth set of codes may cause the computer to access a payor profile database or payee profile database to retrieve the one or more payor-defined payment attributes or payee-defined payment attributes from a payor profile or payee profile associated with the payor/payee or the attributes may be defined by the payor or payee proximate a point in time of the financial payment request.

According to further embodiments the computer program product may include an optional fourth set of codes for causing the computer to receive one or more transaction-processing financial institution-defined payment attributes. In such embodiments, the second set of codes may further cause the computer to apply the financial institution-defined payment attributes to the one or more routing rules to determine the payment routing. Additionally, other optional embodiments of the computer program product may include a fourth set of codes for causing the computer to receive one or more transaction-processing financial institution-defined payment attributes and at least one of one or more payor-defined payment attributes or one or more payee-defined payment attributes. In such embodiments, the second set of codes may further cause the computer to apply the financial institution-defined payment attributes and the least one payor-defined payment attributes or payee-defined payment attributes to the one or more routing rules to determine the payment routing.

In yet another alternate embodiment, the compute program product may include a fifth set of codes for causing the computer to transform the financial payment transaction to a normalized formal prior to determining the payment routing, In such embodiments the fifth set of codes may further cause the computer to transform the financial payment transaction to a format associated with the determined payment routing prior to providing the financial payment to the payee via the determined payment type.

Thus, present embodiments herein disclosed provide for optimizing routing of financial payments by determining routing on a per-payment transaction basis based on one or more routing rules. The routing roles take into account payment factors such as, but not limited to, cost of payment processing, time for payment processing, risk/quality of payment processing (*i.e*., insuring that the payment is made) and/or the destination of the payment. From the payor/payee perspective, payor-defined payment attributes and or payee-dafined payment attributes associated with these or other payment factors can be predefined in a payol/payee profile or dynamically defined proximate to the time at which the payment request is initiated. In this regard, present embodiments serve to create a payment process that is beneficial, in terms of cost, timeliness, quality and the like, to the payor, the payee and the financial institution handling payment processing.

To the accomplishment of the foregoing and related ends, the one or more embodiments comprise the features hereinafter fully described and particularly pointed out in the claims. The following description and the annexed drawings set forth in detail certain illustrative features of the one or more embodiments. These features arc indicative, however, of but a few of the various ways in which the principles of various embodiments may be employed, and this description is intended to include all such embodiments and their equivalents.

### BRIEF DESCRIPTION OF THE DRAWINGS

Having thus described embodiments of the invention in general terms, reference will now be made to the accompanying drawings, which are not necessarily drawn to scale, and wherein;
**FIG. 1** is a block diagram of an apparatus configured to provide rules-band routing of financial payments, in accordance with one embodiment of the present invention;
**FIG. 2** is a more detailed block diagram of the apparatus configured to provide rules-based routing of financial payments, in accordance with one embodiment of the present invention;
**FIG. 3** is flow diagram of a method for processing financial payment requests, in accordance with an embodiment of the present invention;
**FIG. 4** is a block diagram of financial payment input channels; in accordance with an embodiment of the present invention;
**FIG. 5** is a block diagram of payment arrangement attribute/criteria sources, in accordance with another embodiment of the present invention;
**FIG. 6** is a block diagram of specific payment processes, including optional processes, in accordance with an embodiment of the present invention;
**FIG. 7** is a block diagram of payment validation processes, in accordance with an embodiment of the present invention;
**FIG. 8** is et block diagram of examples of routing rules, in accordance with an embodiment of the present invention;
**FIG. 9** is a block diagram of remittance and settlement channels, in accordance with another embodiment of the present invention; and
**FIG. 10** is a block diagram or a flow diagram of a method for processing financial payments by determining payment routing on a per-payment request basis, according to a yet another embodiment of the invention.

### DETAILED DESCRIPTION OF EMBODIMENTS OF THE INVENTION

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure will satisfy applicable legal requirements. In the following description, for purposes of explanation, numerous specif details are set forth in order to provide a thorough understanding of one or more embodiments. It may be evident; however, that such embodiment(s) may be practiced without these specific details. Like numbers refer to like elements throughout.

Various embodiments or features will be presented in terms of systems or apparatus that may include a number of devices, components, modules, and the like. It is to be understood and appreciated that the various systems or apparatus may include additional devices, components, modules, etc. and/or may not include all of the devices, components, modules etc. discussed in connection with the figures. A combination of these approaches may also be used.

The steps and/or actions of a method or algorithm described in connection with the embodiments disclosed herein may be embodied directly in hardware, in a software modules executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some embodiments, the processor and the storage medium may reside in an Application Specific Integrated Circuit (ASIC). In the alternative, the processor and the storage medium may reside as discrete components in a computing device. Additionally, in some embodiments, the events and/or actions of a method or algorithm may reside as one or any combination or set of codes and/or instructions on a machine-readable medium and/or computer-readable medium, which may be incorporated into a computer program product.

In one or more embodiments, the functions described may be implemented in hardware, software, firmware, or any combination, thereof If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optional disk storage, magnetic disk storage or other magnetic storage devices, or any other medium that can be used to carry or store desired program code in the form of instructions or data structures, and that can be accessed by a computer. Also, any connection may be termed a computer-readable medium. For example, if software is transmitted from a website, server, or other remote source using a coaxial cable, fiber optic cable, twisted pair, digital subscribe line (DSL), or wireless technologies such as infrared, radio, and microwave, then the coaxial cable, fiber optic cable, twisted pair, DSL, or wireless technologies such as infrared, radio, and microwave are included in the definition of medium. "Disk" and "disc", as used herein, include compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

Thus, present embodiments provide for methods, systems, computer program products that provide for optimizing routing of financial payments by determining routing on a per-payment transaction basis based on one or more routing rules. The routing rules take into account payment factors such as, but not limited to, cost of payment processing, time for payment processing, risk/quality of payment processing and/or the destination of the payment. From the payor/payee perspective, payor-defined payment attributes and/or payee-defined payment attributes associated with these or other payment factors can be predefined in payor/payec profile or dynamically defined proximate to the time at which the payment request is initiated. Thus, present embodiments serve to create a payment process that is beneficial, in terms of cost, timeliness, quality and the like, to the payor, the payee and financial institution handling payment processing.

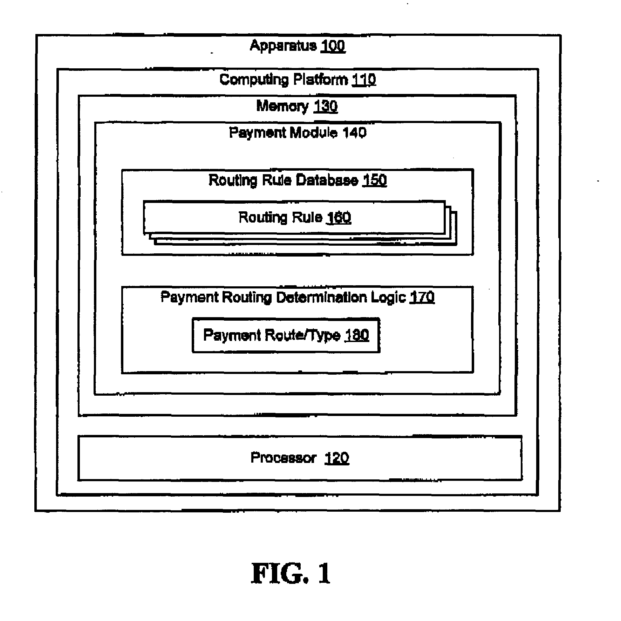

Referring to **FIG. 1** a block diagram is depicted of an apparatus 100 configured to provide financial payment processing, according to embodiments of the present invention. As previously noted apparatus 100 may include one or multiple devices. In multiple device embodiments, the devices may be in networked communication with one another. Apparatus 100 includes a computing platform 110 having at least one processor 120 and a memory 130.

Memory 130 of apparatus 104 includes a payment module 140, otherwise referred to herein as a payment hub module, that is operable to receive payment requests, process the requests accordingly and clear the requests for remittance and settlement. It should be noted that while FIG. 1 depicts a single module, in accordance with present embodiments, payment module 140 may comprise multiple modules and the multiple modules may be included within various different apparatus. Thus, the routines, applications, databases and logic described in relation payment module 140 may be included within multiple distract modules.

The payment module 140 includes routing rules database 150 that includes one or more routing rules 160. The routing rules 160 may be related to payment routing factors such as, but not limited to, price/cost of processing payment, time requirements for processing the payment, the quality/risk requirements or allowances for processing the payment (*i*.*e*., the guarantee of remittance and settlement, the ability to stop payment and the like), the destination of the payment and the like.

The payment module 140 additionally inches payment routing determination logic 170. The logic 170 is executable by the processor 120 and is operable to determine payment routing (*i*.*e*., a payment type 180, otherwise referred to herein as a payment route) for a payment transaction from amongst more than one alternative payment types based on application of one or more of the routing rules. For example, the logic 170 may determine payment routing from along more than one alternative payment type, such as, but not limited to, paper/check payment, electronic, Automated Clearing House (ACH) payment, wire payment, Society for Worldwide Interbank Financial Telecommunications (SWIFT) payment, card-type payment, merchant payment, account transfer payment, collection payment or the like. More than one alternative payment type indicates more than one alternative payment type from the aforementioned listing. For example, one alternative may be paper/check payment or electronic/ACH payment, while more than one alternative, specifically two alternatives, may be paper/check payment or electronic/ACH payment *(e.g*., the first alternative) and paper/check payment or wire payment (*e.g.* the second alternative). Another example of more than one alternative, specifically three alternatives, is paper/check payment or SWIFT payment (*e.g.*, the first alternative) and paper/check payment or card-type payment (*e.g*. the second alternative) and paper/check payment or electronic/ACH payment (*e.g.*, the third payment).

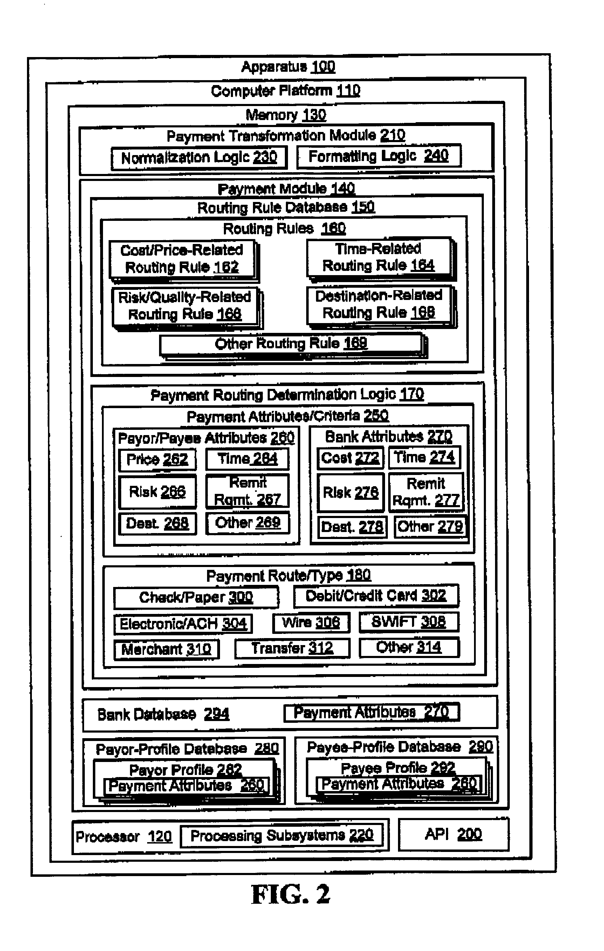

FIG. 2 provides a more detailed depiction of the apparatus 100, according to further embodiments of the present invention. In addition to providing greater detail, FIG. 2 highlights various optional embodiments. The apparatus 100 may include any type and/or combination of one or more computing devices, such as a personal computer, a laptop/portable computer, a wireless or handheld computing device, a server or the like. The computer platform 110 is operable to receive and execute modules, routines and applications, such as payment module 140 and the like. Computer platform 110 includes memory 130, which may comprise volatile and nonvolatile memory such as read-only and/or random-access memory (RAM and ROM), EPROM, EEPROM, flash cards, or any memory common to computer platforms. Further, memory 130 may include one or more flash memory calls, or may be any secondary or tertiary storage device, such as magnetic media, optical media, tape, or soft or hard disk.

Further, computer platform 110 also includes processor 120, which may be an application-specific integrated circuit ("ASIC"), or other chipset, processor, logic circuit, or other data processing device. Processor 120 or other processor such as ASIC may execute an application programming interface ("API") layer 200 that interfaces with any resident programs, such as payment module 140, payment transformation module 210 or the like, stored in the memory 130 of apparatus 100.

Processor 120 includes various processing subsystems 220 embodied in hardware, firmware, software, and combinations thereof, that enable the functionality of apparatus 100 and the operability of the apparatus on a network. For example, processing subsystems 220 allow for initiating and maintaining communications, and exchanging data, with other networked devices.

The memory 130 of apparatus 130 may optionally include payment transformation module 210 that is in communication with processor 120 and is operable to normalize the payment requests and subsequently transform the processed payment requests to the format of the determined payment route/type. Normalization of payment types allows for the payment module 140 to process all types of payment requests in a payment warehouse-type environment using similar processing and techniques. Thus, payment transformation module 210 includes normalization logic 230 executable by processor 120 and operable to transform/normalize all inbound payment requests to a normalized format, for example an International Organization for Standardization (ISO) 20022 Universal Financial Industry Message Scheme or the like. Payment transformation module 210 additionally includes payment formatting logic 240 executable by processor 120 and operable to transform the post-payment processing, normalized format to the format of the determined payment route/settlement type,

The payment module 140 is operable to receive payment instructions, validate the payment and determine routing for the payment. In accordance with present embodiments of the invention, the payment module 140 is operable to determine payment routing on a per payment-basis, such that the manner in which payment is remitted and settled may be determined based on characteristics related to the payment and/or payor, and/or payee and/or the financial institution handling the payment. In this regard, payment optimization is realized by the payor, the payee and/or the financial institution in terms of cost of payment processing, timeliness of payment processing and the quality/risk of the payment process.

Similar to FIG. 1, single modules are depicted for payment transformation module 210 and payment module 140, however, in accordance with present embodiments, the Modules may comprise multiple modules and the multiple modules may be included within various different apparatus, Thus, the routines, applications, database and logic described in relation payment transformation module 210 and payment module 140 may be included within multiple modules. Likewise, the rules and logic discussed in relation to payment transformation module 210 and payment module 140may be included or implemented in multiple applications or routines.

Payment module 140 includes routing rule database 150 routing rules database 150 that includes one or more muting rules 160. The routing rules 160 may be related to payment routing factors such as, but not limited to, price/cost of processing payment, time requirements for processing the payment, the quslity/risk requirements or allowances for processing the payment (*i.e.*, the guarantee of remittance and settlement, the ability to stop payment and the like), the destination of the payment and the like. Thus, the routing rules 160 may include one or more cost/prico-related routing rules 162, one or more time-related routing rules 164, one or more risk/quality-related routing rules 166, one or more destination-related routing rules 168 or other routing rules 169.

Cost/price-related routing rules 162 may define which remittance/settlement type 180 is chosen based on the price that the payor and/or payee is willing to bear for the payment being made or the cost that the financial institution is willing to bear or likely to charge the payor for handling the payment. In this regard, different remittance settlement types may be associated with differed payment prices, such that, payment by one remittance/settlement type may be higher or lower in terms payment price than another remittance/settlement type.

Time-related routing rules 164 may define which ramittance/settlememt type 180 is chosen based on the payor's, payee's and/or the financial institution's acceptable time for completing the payment transaction. In most instances, the payor and/or payee has a desire to complete the payment as timely as possible, while the financial institution handling the payment has a desire to delay the ramittance/settlement for as long a time period as possible. However, it should be noted that while in most instances the payor is concerned with making the payment as timely as possible in other instances the payor may desire to delay the time for payment, for example, if insufficient funds currently exist in the account from which the payment is being made.

Risk/Quality-related routing rules 166 may define which remittance/settlement type 180 is chosen based on the ability to insure or guarantee that the payment will be made, in other words, the service level afforded to the payment or the number of failure opportunities associated with different payment remittance/settlement types. Other risk/quality routing rules 166 may define the ability to return or stop payment during the payment process, data reconciliation capabilities, such as how funds are balanced, or any other routing rule associated with a quality or risk attribute as defined by the payor, the payee and/or the financial institution handling the payment process.

Destination-related routing rules 168 may define which remittance/settlement type 180 is chosen based the destination of the payment. For example, domestic payment may dictate certain types of remittauce/settlement, while international payment may dictate other types of remittance/settlement.

Other touting rules 169 may additionally define other criteria for choosing the remittance/settlement type 180. Other routing rules may be dictated by the needs of the financial institution handling the payment process, the payor and/or the payee.

Payment module 140 additionally includes payment routing determination logic 170 that is executable by the processor 120 and is operable to determine payment routing (*i.e.,* a payment type 180, otherwise referred to herein as a payment route) for a payment transaction from amongst more than one alternative payment types based on application of one or more of the routing rules. In instances in which more than one routing rule is applied to determine the remittance settlement type 180, the payment routing determination logic 170 may be operable to determine priority of the routing rules and/or make the appropriate routing determination that insures that the payor/payee and/or financial institution handling the payment process needs are met.

The payment routing determination logic 170 is operable to apply one or more payment attributes/payment criteria 250 to the one or more routing rules 160 to determine the payment route/type 180. The payment attributes may be payor-defined/payee-defined payment attributes 260 and/or financial institution/bank-defined payment attributes 270. The payot-defined/payee-defined payment attributes 260 may include, but arc not limited to, price 262, time 264, risk/quality 266, remittance requirements, 267, destination 268 or any other appropriate attribute 269 that may be applied to a routing rule. The financial institution/bank-defined payment attributes 270 may include, but are not limited to, cost 272, time 274, risk/quality 276, remittance requirements 277, destination 278 or any other appropriate attribute 279 that may be applied to a routing rule.

The payment attributes/criteria 250 may be dynamically defined at the time of the payment request by the payor, the payee or the financial institution or the payment attributes/criteria 250 may be predefined attributes associated with the payor, the payee and/or financial institution. Additionally, in certain embodiments, payment attributes/criteria may be defined dynamically be the payor, payee and/or financial institution during the payment process, Thus, memory 130 may include, or the payment module may be in communication with another auxiliary device's memory (not shown in FIG. 2) that includes, payor-profile database 280, payee-profile database 290 and/or financial instiintion/bank database 294 operable for storing payment sttributes/criteria. Thus, payor-profile database 280 may include a plurality of payor/customer profiles 282 and each profile 282 includes payment attributes/criterla 260 associated with the payor. Payee-profile database 290 may include a plurality of payee profiles 292 and each profile 292 includes payment attributes/criteria 260 associated with the payee. The financial institution/bank database 294 may include payment attributes/criteria 270 associated with an input payment request type or any other relevant association.

As previously noted, the payment routing determination logic 170 may determine any appropriate payment route 180 type from among more than one alternative. The payment route/type may include check/paper 300, credit/debit card 302, electronic/ACH 304, wire 306, SWIFT 308, merchant 310, account transfer 312 or ant other 314 remittance/settlement payment route/type. An alternative payment route comprises two or more of the payment route-types. For example, check/paper 300 or credit/debit 302 comprises one alternative payment route, SWIFT 308 or account transfer 312 comprises another alternative payment route and wire 306 or SWIFT 308 or merchant 310 comprises another alternative payment route.

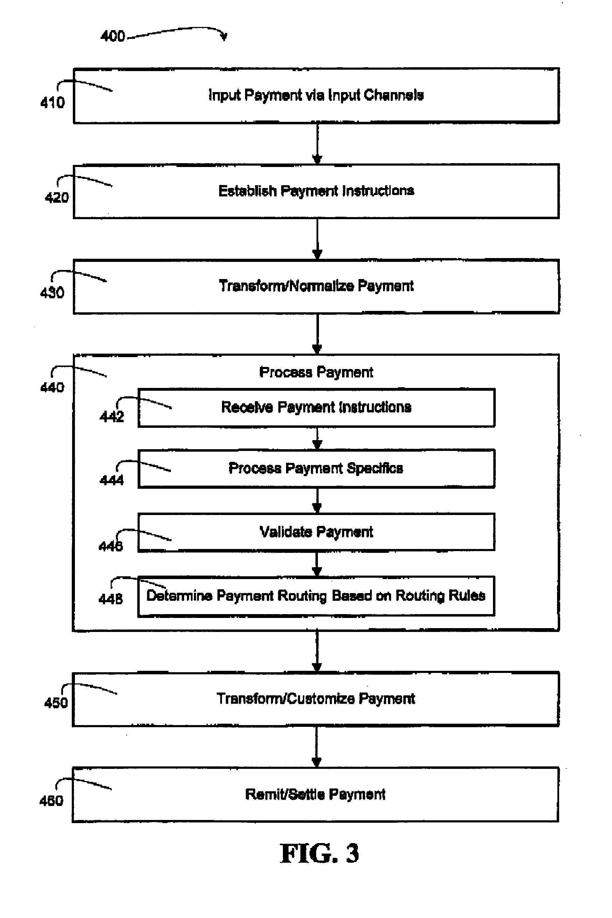

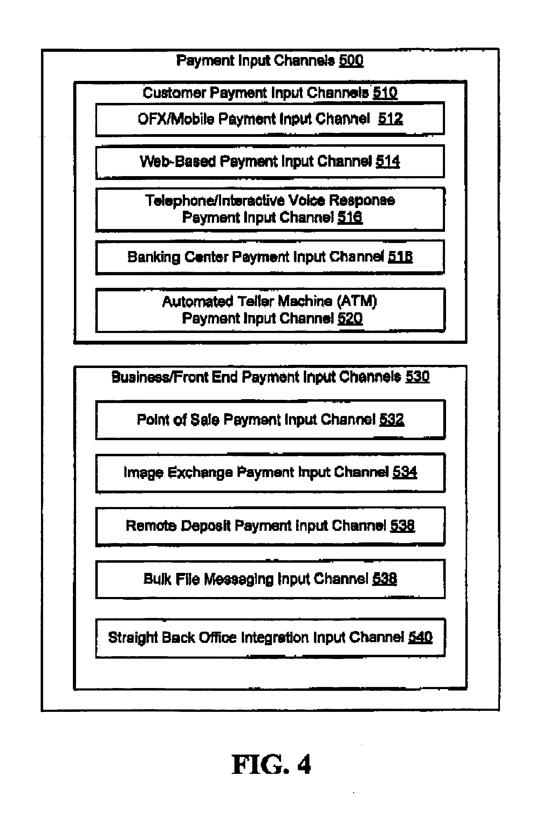

FIG. 3 provides a flow diagram of a composite method 400 for payment processing including rules-based determination of payment routing, in accordance with an embodiment of the present invention. At Event 410. a payment request is inputted via a designated input channel. FIG. 4 provides a block diagram of various examples of payment input channels 500. It should be noted that the payment input channels 500 shown in FIG. 4 are by of example only and are not intended to be limiting. The payment input channels 500 may include customer payment input channels 510 and business/front end payment input channels 530. The customer payment input channels 510 provide for customer-to-business payment inputs and/or customer-to-consumer (*i.e.*, consumer-to-consumer) payment inputs. The business/front end payment input channels 530 provide for business-to-business payment inputs and/or business-to-consumer payment inputs.

The customer payment input channels are user interface's and may include, but are not limited to, Open Financial Exchange(OFX)/Mobile payment input channel 512, generally operable on handheld devices and the like; web-based payment input channel 514, such as the Internet or a corporate website that is generally operable to receive Automated Clearing House (ACH) requests, wire payment requests, bill payment and the like; telephone/Interactive Voice Response (IVR) payment input channel 516; banking center payment input channel (in person) 518; and Automated Teller Machine (ATM) payment input channel 520.

The business/front end input channels 530 include, but are not limited to, point-of-sale payment input channel 532, such as credit/debit card swipe or the like, image exchange payment input channel 534; remote deposit payment input channel 536; bulk file messaging payment input channel 538; and straight back office integration input channel 540, in which a business application directly calls/accesses a financial institution payment engine to originate a transaction.

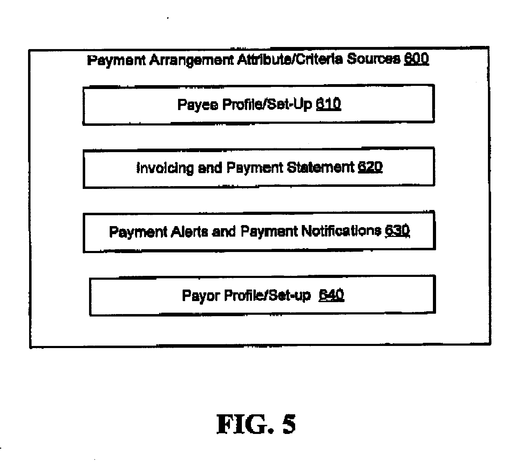

Referring again to the method 400 of FIG. 3, at Event 420, payment arrangement attributes/criteria arc established. The payment arrangement attritutes/criteria are configurable data that is associated with a consumer payor/payee or a corporate payor/payee and is subsequently used by the rules-based route determination logic (Event 546) to determine the appropriate remittance/settlement route. FIG. 5 provides a block diagram of various examples of payment arrangement criteria/attribute sources 600. The sources 600 may include, but are not limited to, payee profile/set-up 610. Payee profile/set-up 610 may be a dynamic set-up for a specific payment that the payee is to receive. For example, the payee receives notification that a payment is forthcoming and through as appropriate designated channel, such as a website or the like, the payee configures payment attributes/criteria, such as the time requirements for the payment or the like. Alternatively, the payee may have a predetermined payment profile, which may be stored in an accessible payee profile database that predefines payment attributes/criteria.

The payment arrangement criteria/attribute sources 600 may additionally include invoicing and payment statements 620 issued by the payor and/or payee that define payment arrangement attributes/criteria for a specific payment or a series of payments, such as payment risk/quality, payment destination and the like. Sources 600 may additionally include payment alerts and/or payment notifications 630 that are generally associated with a specific payment or a series of payments and define payment arrangement criteria specifically designated by the payor, the payee or the financial institution handing the payment transaction.

The payment arrangement criteria/attribute sources 600 may include payor profile/set-up 640. Payor profile/set-up 640 may be a dynamic set-up for a specific payment that the payor has requested. Alternatively, the payor may have a predetermined payment profile, which may be stored in an accessible payor profile database that predefines payment attributes/criteria.

Referring again to the method 400 of **FIG. 3**. at Event 430, the payment request may be transformed, otherwise referred to as normalized, to a standard format to allow for processing of all different payments regardless of input channels. In conventional payment processing each payment input channel requires a dedicated silo for processing the payment In accordance with present embodiments, tranformation/normalization to a standard format, such as ISO 20022 Universal Financial Industry Message Scheme or the like, allows for payment processing to occur generically regardless of the payment input channel.

At Event 440, payment processing occurs at what is referred to herein as a payment hub. Based on the transformation/normalization of the payment request, the payment hub is capable of processing all types of payment input requests. It should be noted that while the events (Events 442, 444 and 446) shown in payment processing block occur in sequential order, according to present embodiments, the events may occur in any order, as determined by the payment hub, in order to optimize the payment process.

It should be noted that the routines, modules, applications and functions shown in relation to Event 440 and describe herein as occurring in the payment engine may be accessed and implemented by other applications, such as other payment processing applications that do not implement the payment engine or the like. In this regard, other applications may access the specific routines, modules, applications and functions on an as-needed basis. For example, if another payment processing application requires payment validation in the form of compliance to anti-money laundering laws, the application can access and implement that specific portion of the payment hub as opposed to implementing the payment hub in its entirety.

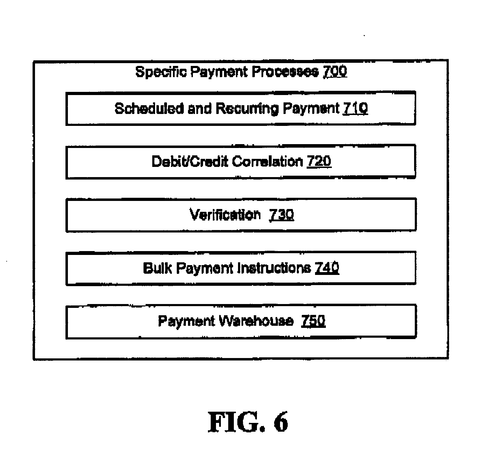

Payment processing may include, at Event 442, receiving the payment instructions, such as payment attributes/criteria, invoicing/statements, alerts, notifications and the like, which are used to make payment processing decisions. At Event 446, specific payment processing occurs based on the payment type being made. **FIG. 6** is a block diagram detailing various exemplary specific payment processes 700 that may be implemented at the payment hub, in accordance with embodiments of the present invention. It should be noted that the specific payment processes 700 highlighted in **FIG. 6** are by way of example only and are not intended to be limiting. In addition, the ordering of the payment processing may be determined at the payment hub, in some embodiments on a per-payment basis, to increase the overall efficiency and effectiveness of the payment processing model.

Specific payment processes 700 may include scheduled and recurring payment processing 710. Such processing manages the initiation of future dated and recurring payments, including the use of predefined custom templates set-up for the scheduled/recurring payments. Additionally, specific payment processes 700 may include debit/credit correlation processing 720 including timing and sequencing processing to insure the relationship of the original payment association. In this regard, individual credits are associated and balanced to original debit when processed at a payment item level.

The specific payment processes 700 may also include verification processing 730 operable to verify the payment and associated account attributes to insure positive clearing of the payment. Additionally, specific payment processing 700 may include bulk payment processing 740 that aggregates and optimizes communications to external systems for large payment files having multiple individual payment items with multiple payment items having the same posting accounts. Also, specific payment processing may 700 include payment warehouse processing 750 that is operable to store future dated payments, payment history, recurring payment models and the like.

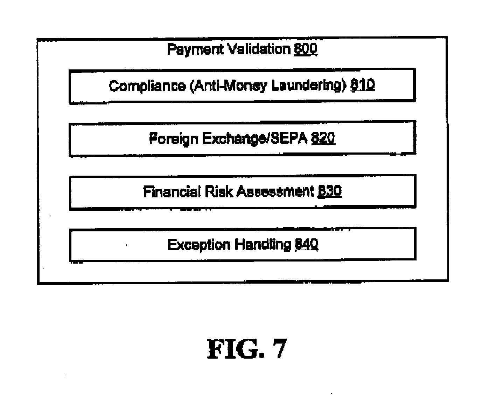

Referring again to the method 400 of **FIG. 3**, payment processing (Event 440) may also include validation processing 446 of the payment. **FIG. 7** is a block diagram detailing various exemplary validation processes 800, that may be implemented at the payment hub, in accordance with embodiments of the present invention. It should be noted that the specific validation processes 800 highlighted in **FIG. 7** arc by way of example only and are not intended to be limiting. In addition, the ordering of the validation processing may be determined at the payment hub, in some embodiments on a per-payment basis, to increase the overall efficiency and effectiveness of the payment processing model.

Validation processing 800 may include compliance processing 810 operable to insure anti-money laundering of the payment. Compliance processing may include a security check of Office of Foreign Asset Control (OFAC) listing of known individuals, corporations or the like associated with illegal payment processing. Additionally, validation processing 800 may include foreign exchange/Single European Payments Area (SEPA) processing 820 operable to maximize foreign currency exchange rates, provide for multi-currency support and insure compliance with SEPA rules and regulations.

In addition, validation processing 800 may include financial risk assessment processing 830 operable to provide credit and risk management for the overall payment process. In this regard, the financial risk assessment process may provide for liability risk assessment scores and the like that are subsequently used by the rules-based routing determination to limit or mandate the type of remittance/settlement route that may be implemented. For example, if the financial risk is determined to be high, route determination may exclude wire payments as a remittance/settlement payment option.

Also, validation processing 800 may include exception handling processing 840 operable to provide centralized exception processing and management of all payment types. Exception processing takes into account errors in the payment processing, such as formatting error or the like and may implement an auto repair for common exceptions/errors. Auto repair of exceptions provides for less need for manual intervention and improves straight-through payment processing rates.

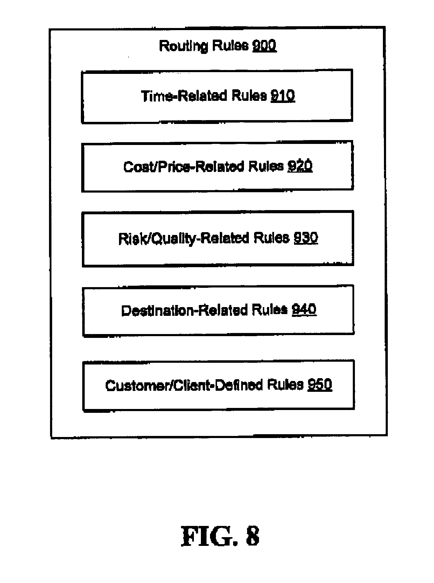

Referring again to the method 400 of **FIG. 3**, payment processing (Event 440) also includes rules-based route determination processing 448, as previously discussed in relation to **FIGS. 1** and **2**. **FIG. 8** provides a block diagram of exemplary routing rules 900 that may be implemented in a payment route determination process, in accordance with an embodiment of the present invention. The routing rules illustrated are by way of example only. It should be noted that for any one route determination process one or more of the routing rules may be applied. Priority given to one or more of the rules may be based on payor profile data, payee profile data, notifications, alerts, financial institution rules, and the like. The routing rules 900 may be related to payment routing factors such as, but not limited to, price/cost of processing payment, time requirements for processing the payment, the quality/risk requirements or allowances for processing the payment (*i.e.,* the guarantee of remittance and settlement, the ability to stop payment and the like), the destination of the payment and the like. Thus, the routing rules 900 may include one or more time-related rules 910, cost/price-related routing rules 920, one or more risk/quality-related routing rules 930, one or more destination-related routing rules 940 or other payor/payee defined routing rules 950.

As previously noted, time-related routing rules 910 may define which remittance/settlement type 180 is chosen based on the payor's, payee's and/or the financial institution's acceptable time for completing the payment transaction. In most instances, the payor and/or payee has a desire to complete the payment as timely as possible, while the financial institution handling the payment has a desire to delay the remittance/settlement for as long a time period as possible. Cost/price-related routing rules 920 may define which remittance/settlement type 180 is chosen based on the price that the payor and/or payee is willing to bear for the payment or the cost that the financial institution is willing to bear or likely to charge the payor for handling the payment.

Risk/Quality-related routing rules 930 may define which remittance/settlement type 180 is chosen based on the ability to insure or guarantee that the payment will be made, in other words, the service level afforded to the payment or the number of failure opportunities associated with different payment remittance/settlement types. Other risk/quality routing rules 166 may define the ability to return or stop payment during the payment process, data reconciliation capabilities, such as how funds are balanced, or any other routing rule associated with a quality or risk attribute as defined by the payor, the payee and/or the financial institution handling the payment process. Destination-related routing rules 940 may define which remittance/settlement type 180 is chosen based the destination of the payment. For example, domestic payment may dictate certain types of remittance/settlement, while international payment may dictate other types of remittance/settlement.

Payor/payee-defined 950 may additionally define other criteria for choosing the remittance/settlement type. Payor/payce-defined routing rules 950 may be dynamically defined proximate to the time of the payment request or may be predefined in the payor or payee profile, In most instances, payor or payee-defined routing rules will override any other routing rules.

Referring once again to the method 400 of **FIG. 3**. payment processing may include other processing (not shown in **FIG. 3**) such as remittance reporting, Business Process Management (BPM) orchestration, transaction tracking/visibility and the like. Remittance reporting provides electronic reporting of the remittance to associated services; examples of remittance reporting include, but are not limited to, Demand Deposit Account (DDA) statements, account reconciliation reporting, balance and transaction reporting and the like. BPM orchestration is operable to determine the order in which processes are taken up in the payment hub, determine and mange the delivery of information to the payment warehouse and the like. The order in which processes are taken up may be determined based on payment input channel, payment attributes/criteria or the determined payment route. Thus, BPM orchestration provides a set of tools for efficiently aligning payment processing. Transaction/tracking visibility allows the payor, payee or any other individual or corporate entity with designated access to view where the payment currently resides in the overall process payment flow. Transaction/tracking visibility is typically implemented through an online user interface, such as a web-based interface or the like.

At Event 450, the normalized and processed payment is transformed to the remittance/settlement target clearing format. Transformation to the target cleaning format is dictated by the initial normalization of the payment request to a standardized format.

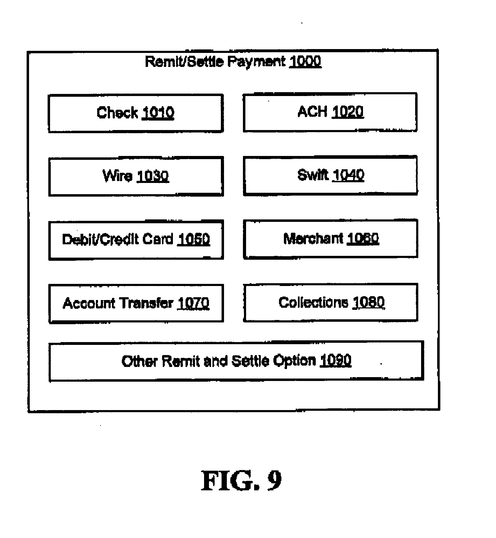

At Event 460, payment is remitted and settled according to the determined payment route. **FIG. 9** provides a block diagram of exemplary remittance/settlement payment channels 1000, in accordance with embodiment of the present invention. The remittance payment channels 1000 may include check payment 1010, Automated Clearing House (*i.e.,* electronic) payment 1020, wire payment 1030, Society for Worldwide International Financial Telecommunication (SWIFT) payment 1040, debit/credit card payment 1050, merchant payment 1060, and account transfer payment 1070 and settlement channels may include collections 1070 or the like. Additionally, other remittance/settlement payment channel options 1090 may be implemented, such as to take into account future known settlement and remittance options.

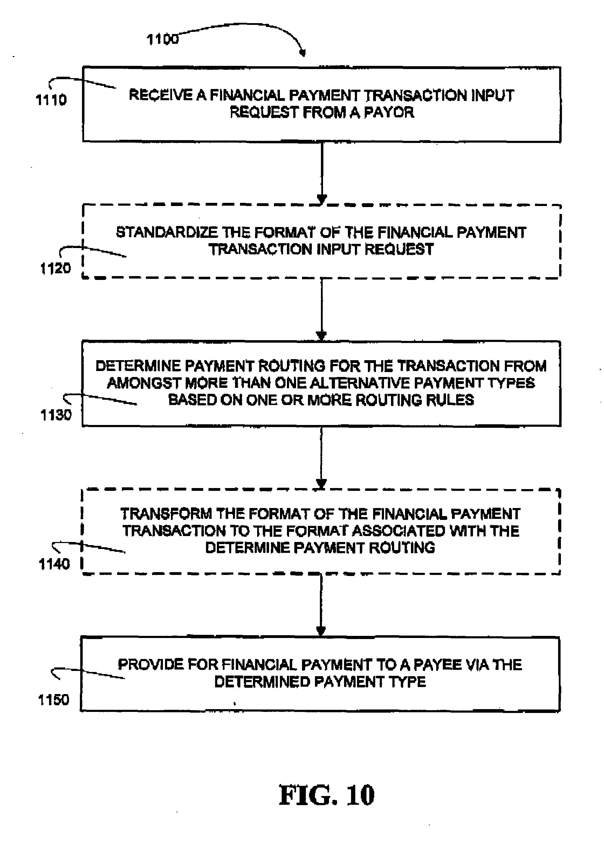

Referring to **FIG. 10** a flow diagram is illustrated of a method 1100 for rules-based payment routing determination, in accordance with embodiment of the present invention. At Event 1110, a financial payment transaction request is received from a payor. The payor may input the financial transaction request using any known or future known payment input channel. Examples of payment input channels include, but are not limited to, Open Financial Exchange (OFX)/mobile, web-based, Interactive Voice Response (IVR)/telephone, banking center, Automated Teller Machine (ATM), debit/credit card, merchant, check, image, wire, Automated Clearing House (ACH) or the like.

At optional Event 1120, the financial transaction request may be transformed to a normalized or standard format such as International Organization for Standardization (ISO) 20022 Universal Financial Industry Message Scheme or the like. According to present embodiments financial transaction requests initiated from any known or future known input channel may be normalized/standardized to allow for further generic processing of the payment transaction request. In this regard, standardized formatting of the financial payment transaction request provides for payment processing absent the conventional silo-type processing that mandates that the payment input channel be the same as the payment remittance channel.

At Event 1130, a payment route is determined for the transaction request from amongst more than one alternative payment types based on one or more routing rules. Alternative payment types include any known or future known combination of two or more payment types. Examples of payment types (i.e.. remittance or settlement channels) include paper/rcheck. Automated Clearing House (ACH), wire, Society for Worldwide International Financial Telecommunication (SWIFT), debit-credit card, merchant, account transfers and collections.

The routing rules may be associated with any relevant payment parameter, For example, routing rules may be associated with payment processing time, payment processing aos/price, payment processing quality/risk, payments destination or the like. In one specific example, the routing rules may be operable to determine a least-cost payment type that meets time requirements and risk requirements.

In certain optional embodiments of the invention, determining the payment routing may further include applying payor-defined payment attributes/criteria to the one or more routing rules to determine the payment route. In same embodiments, the payor-defined payment attributes, which may be cost limits, time limits, risk limits or the like, may be predefined in a payor-profile, such that input of the financial payment transaction input request prompts access the payor profile to retrieve applicable payment attributes. In other embodiment of the invention, the payor-defined payment attributes may be dynamically defined at or near the input of the financial payment request.

In certain other optional embodiments of the invention, determining the payment routing may further include applying payee-defined payment attributes/criteria to the one or more routing rules to determine the payment route. In some embodiments, the payee-defined payment attributes, which may be cost limits, time limits, risk limits, payment destination or the like, may be predefined in a payee-profile, such that input of the financial payment transaction input request prompts access the payee profile to retrieve applicable payment attributes, In other embodiments of the invention, the payee-defined payment attributes may be dynamically defined proximate the input of the financial payment request. In such instances, the payee may be notified by the financial institution handling the payment that a payment is forthcoming and asking the payee to define appropriate payment attributes/criteria associated with the transaction.

In still other optional embodiments of the invention, determining the payment routing may further include applying financial institution-defined payment attributes/criteria to the one or more routing rules to determine the payment route. In some embodiments, the financial institution handling the processing of the payment transaction may have certain payment attributes/criteria that are applicable to certain payments. The financial institution-defines payment attributes/criteria may be predefined attributes accessible from a financial institution database or the financial institution-defined payment attributes/criteria may be dynamically defined at or near the input of the financial payment request.

It should be noted that any combination of payor-defined payment ettributes/critera, payea-defined payment attributes/criteria and/or financial institution-defined payment attributes/criteria may be relied upon to determine the payment route for any one financial payment transaction.

If the payment transaction input request has been previously normalized to a standard format, at optional Event 1140, the payment transaction is re-formatted or otherwise transformed to a format associated with the determined payment mute. At Event 1150, the financial payment is provided to the payee via the determined payment route.

Thus, methods, devices, systems and computer program products are described herein that provide far optimizing routing of financial payments by determining routing on a per-payment transaction basis based on one or more routing rules. The routing rules take into account payment factors such as, but not limited to, cost of payment processing, time for payment processing risk/quality of payment processing and/or the destination of the payment, From the payor or payee perspective, payor-denned or payee-defined payment attributes associated with those or other payment factors can be predefined in a payor/payee profile or dynamically defined proximate to the time at which the payment request is initiated. In this regard, present embodiments serve to create a payment process that is beneficial, in terms of cost, timeliness, quality and the like, to both the payor, the payee and financial institution handling payment processing.

While the foregoing disclosure discusses illustrative embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any embodiment may be utilized with all or a portion of any other embodiment, unless stated otherwise.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations and modifications of the just described embodiments can be configured without departing from the scope and spirit of the invention. Therefore, it is to be understood that, within the scope of the appended claims, the invention may be practiced other than as specifically described herein.

## Claims

1. A method for processing financial payments, the method comprising; receiving a financial payment transaction from a payor; determining payment routing for the transaction from amongst more than one alternative payment types based on one or more routing rules; and providing for financial payment to a payee via the determined payment type.

2. The method of claim 1, wherein determining the payment routing further comprises determining the payment routing based on one or more routing rules, wherein at least one of the routing rules is associated with one or more of payment processing time; payment processing cost; payment processing risk; payment destination.

3. The method of claim 1 or claim 2, wherein determining the payment routing further comprises determining the payment routing based on one or more routing rules, wherein at least one of the routing rules is associated with remittance requirements and/or determining payment routing further comprises determining the payment routing based on one or more routing rules, wherein the one or more routing rules are operable to determine a least-cost payment type that meets time requirements and risk requirements.

4. The method of any of the preceding claims, further comprising receiving one or more payor-defined payment attributes and wherein determining the payment routing further comprises applying the payor-defined payment attributes to the one or more routing rules to determine the payment routing.

5. The method of claim 4, wherein receiving the one or more payor-defined payment attributes further comprises receiving the one or more payar-deftned payment attributes, wherein each attribute is further defined as being related to at least one of time of payment, cost of payment, payment risk, remittance requirements or destination of payment and/or accessing a payor profile database to retrieve the one or more payor-defned payment attributes from a payor profile associated with the payor and/or receiving the one or more payor-defined payment attributes, wherein the attributes are defined by the payor at substantially a same point in time as the financial payment request.

6. The method of any of the preceding claims, further comprising receiving one or more payee-defined payment attributes and wherein determining the payment routing further comprises applying the payee-defined payment attributes to the one or more routing rules to determine the payment routing, optionally wherein receiving the one or more payor-defined payment attributes further comprises receiving the one or more payor-defined payment attributes, wherein each attribute is further defined as being related to at least one of time of payment, cost of payment, payment risk, remittance requirements or destination of payment and/or wherein receiving the one or more payee-defined payment attributes further comprises accessing a payee profile database to retrieve the one or more payee-defined payment attributes from a payee profile associated with the payee and/or wherein receiving the one or more payee-defined payment attributes further comprises receiving the one or more payee-defined payment attributes, wherein the attributes are defined by the payee proximate in time to the financial payment request.

7. The method of claim 1, further comprising receiving one or more transaction-processing financial institution-defined payment attributes and wherein determining the payment routing further comprises applying the financial institution-defined payment attributes to the one or more routing rules to determine the payment routing.

8. The method of claim 1, further comprising receiving one or more transaction-processing financial institution-defined payment attributes and at least one of one or more payor-defined payment attributes or one or more payee-defined payment attributes and wherein determining the payment routing further comprises applying the financial institution-defined payment attributes and the at least one of the payor-defined payment attributes or payee-defined payment attributes to the one or more routing rules to determine the payment routing.

9. The method of claim 1, further comprising transforming the financial payment transaction to a normalized format prior to determining the payment routing, optionally further comprising transforming the financial payment transaction to a format associated with the determined payment mating prior to providing the financial payment to the payee via the determined payment type.

10. The method of claim 1, wherein determining payment routing for the transaction from amongst more than one alternative payment type further defines the alternative payment type as any two of the group of check payment, Automated Clearing House (ACH) payment, wire payment, card payment, merchant payment, account transfer payment, or Society for Worldwide International Financial Telecommunication (SWIFT) payment.

11. An apparatus for processing financial payments, the apparatus comprising: a computer platform including at least one processor and a memory; a routing rules database stored in the memory and operable to store one or more routing rules; and payment routing determination logic executable by the processor and operable to determine payment routing for a payment transaction from amongst more than one alternative payment types based on application of one or more of the routing rules.

12. The apparatus of claim 11, wherein at least one of the routing rules is associated with at least one of: payment processing time; payment processing cost; payment processing risk; payment destination; remittance requirements.

13. The apparatus of claim 11, wherein one or more of the routing rules are operable to determine a least-cost payment type that meets time requirements and risk requirements and/or the payment routing determination logic is further operable to apply one or more payor-defined payment attributes to the one or more routing rules to determine the payment routing.

14. The apparatus of claim 13, wherein the payor-defined payment attributes are further defined as each attribute being related to at least one of time of payment, cost of payment, payment risk, remittance requirements or destination of payment and/or wherein the payment routing determination logic is further operable to access a payor profile database to retrieve the one or more payor-defined payment attributes from a payor profile associated with the payor and/or wherein the payment routing determination logic is further operable to receive the one or more payor-defined payment attributes, wherein the attributes are defined by the payor at substantially a same point in time as the financial payment request.

15. The apparatus of claim 11, wherein the payment routing determination logic is further operable to apply one or more payee-defined payment attributes to the one or more routing rules to determine the payment routing.

16. The apparatus of claim 15, wherein the payee-defined payment attributes are further defined as each attribute being related to at least one of time of payment, cost of payment, payment risk, remittance requirements or destination of payment and/or wherein the payment routing determination logic is further operable to access a payee profile database to retrieve the one or more payee-defined payment attributes from a payee profile associated with the payee and/or wherein the payment routing determination logic is further operable to receive the one or more payee-defined payment attributes, wherein the attributes are defined by the payee proximate a point in time of the financial payment request.

17. The apparatus of claim 11, wherein the payment routing determination logic is further operable to apply one or more financial institution-deflned payment attributes to the one or more routing rules to determine the payment routing and/or operable to apply one or more financial institution-defined payment attributes and at least one of one or more payor-defined payment attributes or one or more payee-defined attributes to the one or more routing rules to determine the payment muting.

18. The apparatus of claim 11, further comprising payment transaction transformation logic executable by the processor and operable to transform the financial payment transaction to a normalized format prior to determining the payment routing, optionally wherein the payment transaction transformation logic is further operable to transform the financial payment transaction to a format associated with the determined payment routing prior to providing payment to the payee via the determined payment type.

19. The apparatus of claim 11, wherein the payment routing determination logic is further operable to determine payment touting for a payment transaction from amongst more than one alternative payment type, wherein the alternative payment type is chosen from two of the group of check payment, Automated Clearing House (ACH) payment, wire payment, card payment, merchant payment, account transfer payment, or Society for Worldwide International Financial Telecommunication (SWIFT) payment.
